# EUROPEAN PATENT APPLICATION

(11) **EP 4 615 058 A1**
(43) Date of publication of application: **10.09.2025**
(21) Application number: 22964386.1
(22) Date of filing: 01.11.2022
(51) Int. Cl.: H04W 48/16, H04W 4/00, H04W 56/00, H04W 64/00, H04W 72/23, H04W 88/06

(54) **TERMINAL, WIRELESS COMMUNICATION METHOD, AND BASE STATION**

(71) Applicant: NTT DOCOMO, INC., Tokyo 100-6150 (JP)
(72) Inventor: TAKEDA, Daiki, Tokyo 100-6150 (JP); HARADA, Hiroki, Tokyo 100-6150 (JP); KURITA, Daisuke, Tokyo 100-6150 (JP); SHIBAIKE, Naoya, Tokyo 100-6150 (JP); OKANO, Mayuko, Tokyo 100-6150 (JP)
(74) Representative: Hoffmann Eitle
(86) International application number: PCT/JP2022/040868
(87) International publication number: WO 2024/095364

(57) **Abstract**

A terminal according to an aspect of the present disclosure includes: a receiving section that receives, in a first radio communication system, a synchronization signal/physical broadcast channel (SS/PBCH) block including a first synchronization signal, a second synchronization signal, and a physical broadcast channel and receives, in a second radio communication system, a signal group for the second radio communication system; and a control section that controls at least one of synchronization processing, frequency offset correction, cell ID specification, system information acquisition, and cell positioning in the second radio communication system, based on both the SS/PBCH block and the signal group.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, radio communication systems later than Rel. 17/5G, or 6G or later generations), it is assumed to introduce/support a signal having a feature different from that of any existing system. For example, in a certain operation (for example, at least one of an initial connection operation, demodulation operation, and positioning operation) in future radio communication systems, it is assumed to use a new signal.

Meanwhile, studies have not sufficiently been made on design or feature of such a new signal. Unless such a signal newly introduced/supported is used appropriately, the communication quality may be degraded.

In view of this, the present disclosure has one object to provide a terminal, a radio communication method, and a base station that enable communication to be appropriately performed even when a new signal is introduced/supported.

### Solution to Problem

A terminal according to an aspect of the present disclosure includes: a receiving section that receives, in a first radio communication system, a synchronization signal/physical broadcast channel (SS/PBCH) block including a first synchronization signal, a second synchronization signal, and a physical broadcast channel and receives, in a second radio communication system, a signal group for the second radio communication system; and a control section that controls at least one of synchronization processing, frequency offset correction, cell ID specification, system information acquisition, and cell positioning in the second radio communication system, based on both the SS/PBCH block and the signal group.

### Advantageous Effects of Invention

An aspect of the present disclosure enables communication to be appropriately performed even when a new signal is introduced/supported.

### Brief Description of Drawings

[FIG. 1] FIGS. 1A and 1B are diagrams to show examples of single carrier transmission/multi-carrier transmission.
[FIG. 2] FIGS. 2A and 2B are diagrams to show examples of a symbol length corresponding to single carrier transmission/multi-carrier transmission.
[FIG. 3] FIGS. 3A and 3B are diagrams to show examples of signal generation applied to single carrier transmission.
[FIG. 4] FIGS. 4A and 4B are diagrams to show other examples of signal generation applied to single carrier transmission.
[FIG. 5] FIGS. 5A and 5B are diagrams to show examples of a case where single carrier transmission is applied for downlink.
[FIG. 6] FIG. 6 is a diagram to show an example of a frequency multiplexing method in 5G.
[FIG. 7] FIG. 7 is a diagram to show an example of a frame configuration in 6G or later generations.
[FIG. 8] FIG. 8 is a diagram to show an example of features that a new signal (for example, pilot signal) supported in 6G has, according to a first embodiment.
[FIG. 9] FIGS. 9A to 9C are diagrams to show examples of a mapping pattern of a new signal (for example, pilot signal) supported in 6G, according to the first embodiment.
[FIG. 10] FIGS. 10A and 10B are diagrams to show other examples of the mapping pattern of the new signal (for example, pilot signal) supported in 6G, according to the first embodiment.
[FIG. 11] FIG. 11 is a diagram to show an example of a plurality of candidates (patterns) of the mapping pattern of the new signal (for example, pilot signal) supported in 6G, according to the first embodiment.
[FIG. 12] FIG. 12 is a diagram to show another example of the mapping pattern of the new signal (for example, pilot signal) supported in 6G, according to the first embodiment.
[FIG. 13] FIG. 13 is a diagram to show an example of a signal group for an initial access operation supported in 6G, according to a second embodiment.
[FIG. 14] FIG. 14 is a diagram to show another example of the signal group for the initial access operation supported in 6G, according to the second embodiment.
[FIG. 15] FIG. 15 is a diagram to show another example of the signal group for the initial access operation supported in 6G, according to the second embodiment.
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.
[FIG. 20] FIG. 20 is a diagram to show an example of a vehicle according to one embodiment.

### Description of Embodiments

### (Terahertz (THz) Band)

For future radio communication systems (for example, 6G), further progress in use of a high frequency band such as a terahertz wave is assumed. For example, it is conceivable to provide a communication service by constructing a cell area/coverage with use of many fine beams.

A terahertz band enables a wide band to be utilized, as compared with sub 6 (for example, Sub6) operated in 5G, millimeter wave (for example, mmW), and the like. In 6G, with an influence of ultra broadband/single carrier transmission, it is assumed that a symbol length is made extremely short, and thus studies are needed about an influence on numerology (for example, Numerology).

In a region with a high frequency such as a terahertz band, a signal/channel (or beam) to be transmitted is high in rectilinearity, making it difficult to utilize reflected waves. Thus, it is assumed that use of high-order MIMO such as multiple stream transmission is difficult and the frequency selectability is low. An influence of a person shielding or weather is likely to be made, and thus it is assumed that ensuring Line Of Site (LOS) is important. Here, LOS may mean that a UE and a base station are in an environment where both can see each other (or no shielding object exists).

In a terahertz band, an influence such as phase noise is strong, and thus it is assumed that high-order modulation is difficult. Performance such as linearity of an amplifier may be lowered, causing distortion in OFDM or the like supported in an existing system (for example, Rel. 17 or earlier versions). Thus, in a region with a high frequency such as a terahertz band, use of single carrier transmission is assumed.

### (Single Carrier Transmission)

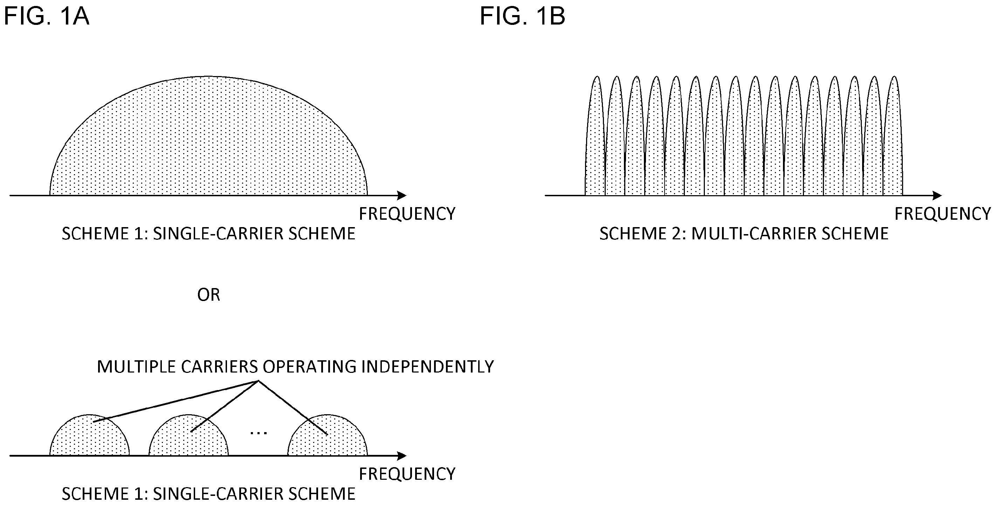

Single carrier transmission is a scheme that modulation is performed using a single carrier wave (see FIG. 1A). FIG. 1A shows an example of a single carrier method (for example, Method 1). In the single carrier method (for example, Method 1), a plurality of carriers that operate independently may be used.

In contrast, a method that modulation is performed using a plurality of carriers is referred to as multi-carrier transmission (see FIG. 1B). FIG. 1B shows an example of a multi-carrier method (for example, Method 2).

In comparison of the single carrier method and the multi-carrier method in the time domain, the single carrier method has a symbol length shorter than that of the multi-carrier method (see

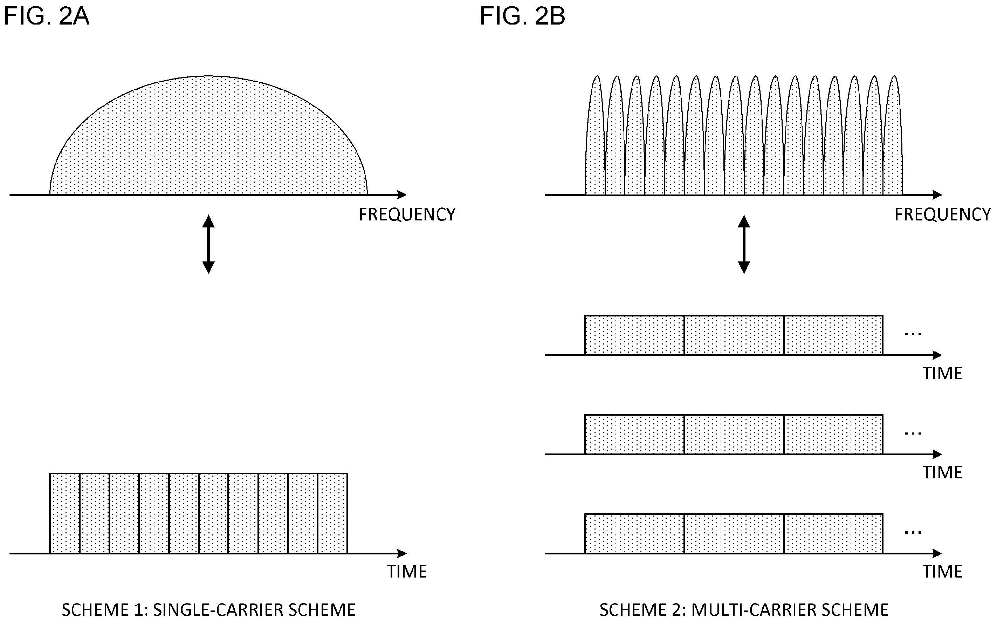

FIGS. 2A and 2B). FIG. 2A shows an example of a symbol length for single carrier transmission. FIG. 2B shows an example of a symbol length for multi-carrier transmission.

Assuming an operation in a terahertz band, it is conceivable that a wider bandwidth may be utilized. In such a case, it is assumed that a time direction is further dense (for example, the symbol length is made shorter).

For signal generation in a case of using the single carrier method, one or more procedures may be applied. For example, signal generation may be performed based on at least one of a generation method of only performing primary modulation (for example, Method 1) or a generation method based on Discrete Fourier Transform Spread Orthogonal Frequency Division Multiplexing (DFT-S-OFDM) (for example, Method 2).

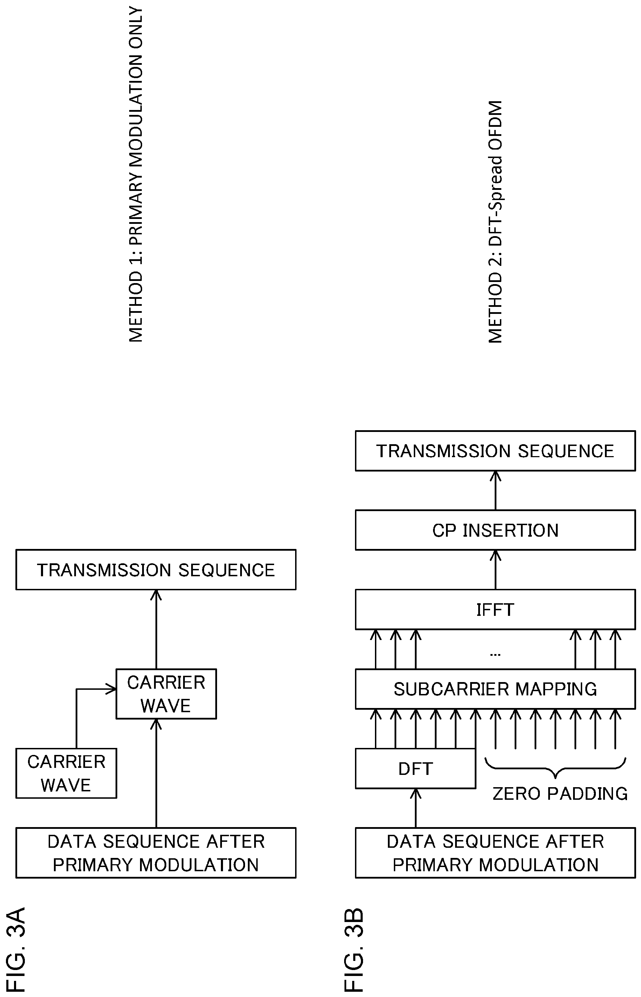

FIG. 3A shows an example of signal generation using Method 1. For example, a transmit sequence is generated, via a modulator, with a data sequence after primary modulation.

FIG. 3B shows an example of signal generation using Method 2. On a data sequence after primary modulation, DFT processing is performed and then subcarrier mapping is performed, and then inverse fast Fourier transform (IFFT) processing is performed. Thereafter, a cyclic prefix (CP) is allocated and a transmit sequence is generated.

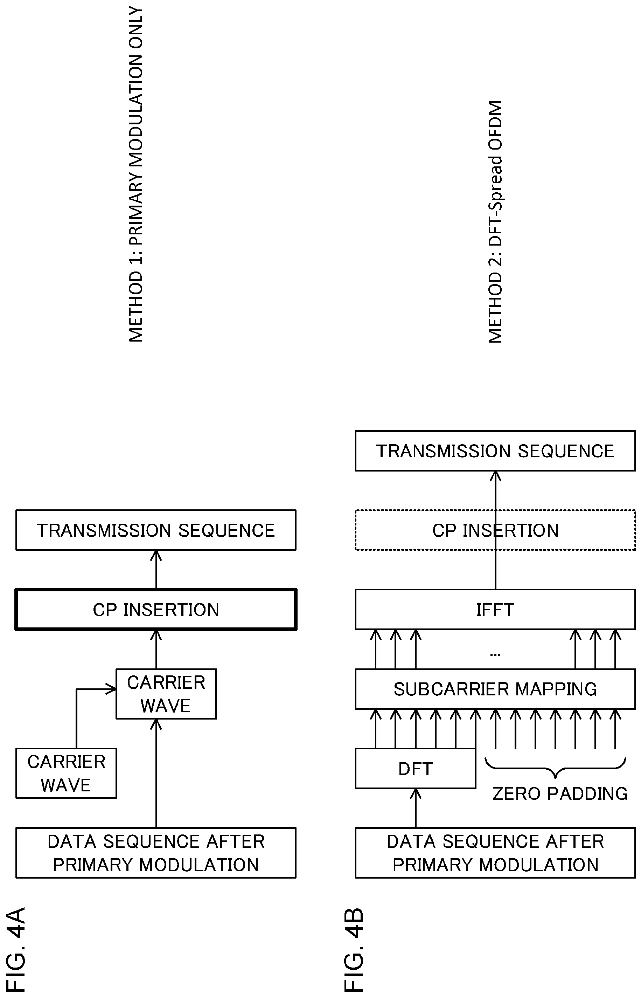

Note that a method of signal generation of Method 1/Method 2 is an example and that a method of signal generation in a case of using single carrier transmission is not limited to this. Part of the processing may be omitted, other processing may be added, or part of the processing may be replaced with other processing. For example, a procedure of CP allocation may be added to Method 1 (see FIG. 4A). Alternatively, a procedure of CP allocation may be omitted in Method 2 (see FIG. 4B).

Meanwhile, in single carrier transmission, multiplexing of a plurality of signals/channels in the frequency direction for a certain UE is difficult. For example, in a case of applying single carrier transmission in DL, cases are conceivable where DL channels/DL signals supported in any existing system (for example, Rel. 15 to Rel. 17) are not able to be used as they are.

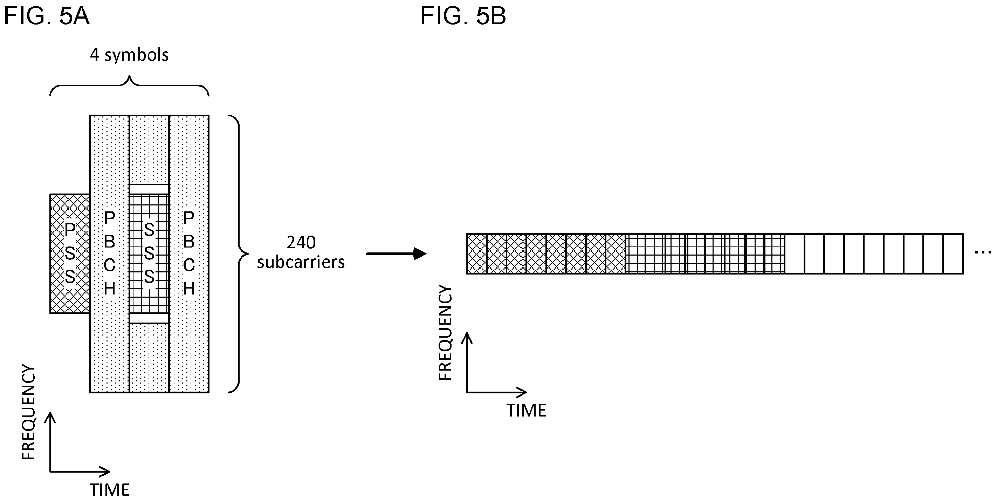

A synchronization block (for example, SS/PBCH block) supported in an existing system includes a PSS/SSS/PBCH (see FIG. 5A). The SSS and part of the PBCH (or a DMRS for the PBCH) are multiplexed in the frequency domain, and thus it is difficult to use the SS/PBCH block in the existing system when single carrier transmission is used.

In a case where a synchronization signal or the like is provided using single carrier transmission in downlink, a method is conceivable that allocation is made in the time direction (for example, mapping of orthogonal sequences in the time direction), instead of multiplexing in the frequency direction (see FIG. 5B). As described above, in a case of using single carrier transmission, instead of frequency multiplexing of a plurality of channels/signals, transmission is performed occupying the carrier for a certain time.

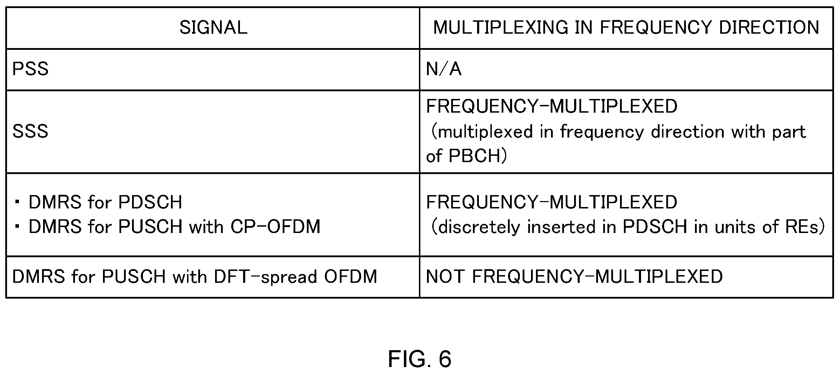

Meanwhile, in an existing system, signal groups not for data transmission (for example, synchronization signals (SSs), reference signals (RSs)) are each mapped in the frequency direction in the most appropriate manner. FIG. 6 is a diagram to show an example of frequency multiplexing in an existing system (for example, Rel. 15 to Rel. 17).

In 5G, a common channel (for example, PDSCH/PUSCH) applied with a multi-carrier method (for example, CP-OFDM) and a DMRS for the common channel are frequency multiplexed. As an example, the DMRS for the PDSCH is discretely inserted in the PDSCH in units of resource elements (for example, REs). The SSS and part of the PBCH (or a DMRS for the part of the PBCH) are multiplexed in the frequency direction. Meanwhile, a UL channel applied with a single carrier method (for example, DFT-spread OFDM) and a DMRS (for example, a PUSCH and a DMRS for the PUSCH) are allocated not being frequency multiplexed.

Signal groups (for example, signal groups of synchronization signals, reference signals, or the like) shown in FIG. 6 have a similar property in that they have orthogonal sequences (or quasi-orthogonal sequences) generated based on a certain rule (for example, the PSS and the DMRS are Zadoff-Chu sequence-based), and thus it is conceivable that the signal groups are re-designed for 6G or later generations in a manner of having more than one roles/usages.

Meanwhile, in 6G or later generations, a communication scheme is assumed where synchronization with a cell is re-acquired only when communication is required, without taking any procedure of existing in a cell. In a terahertz band considered to be limited in the provision area, not only provision of stand-alone (SA) but also use of dual connectivity with an existing system (for example, LTE/4G/5G) are assumed.

In this case, it is conceivable that a UE performs, instead of existing in 6G (or 6G cell) all the time, an operation of using 6G for a short period only when necessary (for example, initial connection operation/demodulation operation or the like). Alternatively, in a case where an LBT scheme on the premise of having a terahertz band shared with other usages is employed, it is conceivable that the operation is performed every time when communication is performed.

In a case where use in URLLC or the like requiring low latency is taken into account, initial access latency is needed to be reduced. Meanwhile, when a signal group for initial access is simply continued to be transmitted in a short periodicity, an increase in overhead of a network is an issue. In 6G, it is assumed that radio link (for example, OTA (Over The Air)) latency of 1 ms or lower is required. When a cell is discovered after waiting for a synchronization signal of any existing system (for example, a synchronization signal transmitted in a default 20 ms periodicity in 5G), the latency is extremely large.

Thus, for radio communication schemes in 6G or later generations, it is expected to introduce/support a new signal (for example, a signal usable for synchronization) with low processing latency and with few terminal load. In view of this, the inventors of the present invention focused on that various pilot signals (such as reference signals and synchronization signals) are required now and also in the future in a mobile NW with increased functions in progress, and came up with the idea of performing at least one of synchronization processing, demodulation processing, and positioning processing with low latency and few terminal load while reducing resources necessary for the pilot signals as much as possible.

Thus, the inventors of the present invention studied on a synchronization signal/reference signal in a case where single carrier transmission is assumed as an example, and came up with the idea of an aspect of the present embodiment (for example, first embodiment).

In 6G or later generations, provision is assumed co-existing with any existing system (for example, 4G/5G). For example, in 6G, with use of a terahertz band, provision of only an extremely small cell is assumed, and a provision scheme similar to non stand-alone (NSA) in 5G is conceivable.

In a case of assuming a scenario where a 4G/5G cell and a 6G cell are synchronized, it is assumed that a function related to time synchronization in 6G is provided using an existing synchronization signal (SS) supported in 4G/5G. In this case, it is conceivable that part of the function of a synchronization signal in 6G depends on 4G/5G.

For example, a configuration such as simplification and the like of operations on 6G side in a way that common frame numbers/cell IDs or the like are used between a plurality of communication systems (for example, 4G/5G/6G) is conceivable. In this case, it is assumed that no synchronization signal is defined for 6G.

As described above, in 6G, a base station/terminal may be provided with hardware implementation different from that in any existing radio access technology (RAT). For example, part of operations such as frequency offset correction in a terminal may be configured in a 6G-specific manner.

However, an issue is design/configuration of a signal (for example, synchronization signal (SS) or the like) used for a certain operation in 6G (for example, initial access operation), in a scenario of co-existing/synchronization of a cell of an existing system (for example, 4G/5G) and a cell of 6G or later generations. In addition, in 6G or later generations, a case is assumed where initial access is frequently performed, taking account of possibility of performing cell detection of 6G in addition to 4G/5G, it is needed to reduce detection load in initial access processing.

Furthermore, as another example, the inventors of the present invention focused on a scenario of co-existing/synchronization of a cell of an existing system (for example, 4G/5G) and a cell of 6G or later generations, studied on a certain operation (for example, initial access operation or the like) in a system of 6G or later generations, and came up with the idea of an aspect of the present embodiment (for example, second embodiment).

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate (or specify), select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, dropping, stopping, canceling, puncturing, rate matching, postponing, not transmitting, and the like may be interchangeably interpreted.

### (Radio Communication Method)

A terminal/base station may control communication in a radio communication system of 6G or later generations, by using at least one of a first embodiment and second embodiment below. The first embodiment and second embodiment may each be employed separately (for example, only one of them may be supported/employed), or may be employed in combination (for example, both of them may be supported/employed).

In the first embodiment/second embodiment, a certain 6G frame configuration may be applied.

For such a 6G frame configuration, a configuration may be used where a network and a terminal are temporally synchronized and operate sharing a time timing related to a symbol/frame configuration as in 4G (for example, LTE) or 5G. In a case where a timing held in the network and the terminal has an error, a CP length or a timing advance (TA) may be used to absorb/correct the error to allow the network and the terminal to operate being synchronized.

Alternatively, for power consumption reduction or utilization efficiency enhancement in high frequencies, it may be supported that a network/terminal operates autonomously without the network and terminal each temporally synchronized.

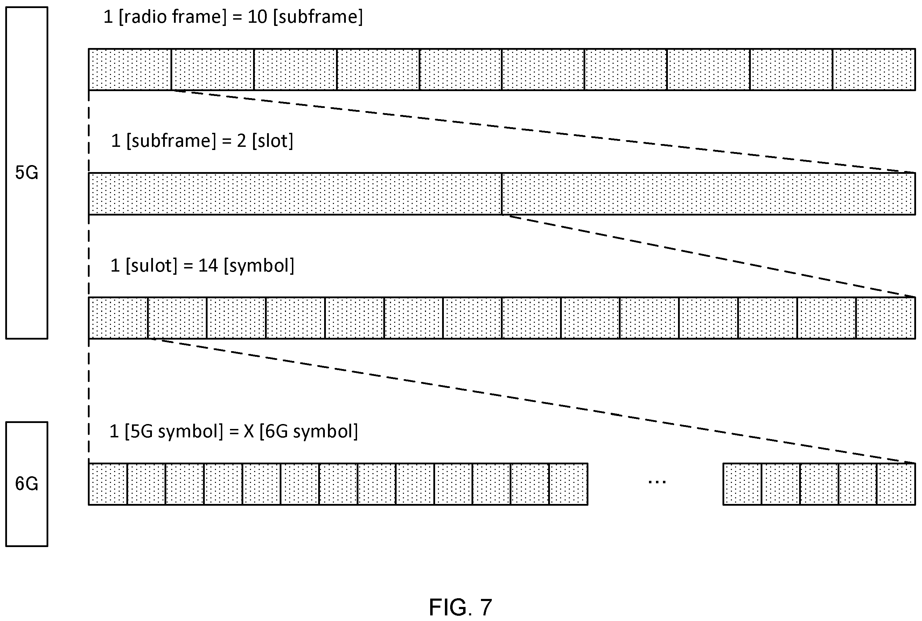

In a radio communication system of 6G or later generations, a frame configuration taking account of co-existing with an existing system (for example, 4G/5G) may be applied. For example, in a radio communication system of 6G or later generations, a symbol length may be defined/configured to be short based on a frame configuration of any existing system (see FIG. 7). In FIG. 7, a case is shown where X symbols for 6G corresponds to one symbol for an existing system (or the one symbol for the existing system includes the X symbols for 6G). X may be defined in a specification or may be configured/indicated for a terminal from a base station by higher layer signaling/DCI.

In the present embodiment, although description is made taking 4G/5G as an example of an existing system and taking 6G or later generations as an example of a future radio communication system, a communication system for the present embodiment to be applicable to is not limited to this. The present embodiment may be applied to another communication system. The existing system (4G/5G) may be interpreted as a first radio communication system or first RAT. The future radio communication system (6G) may be interpreted as a second radio communication system or second RAT.

In the following description, although a case as an example is described where single carrier transmission is supported/applied in downlink, a case for the present embodiment to be applicable to is not limited to this. The present embodiment may be applied to a case of supporting/applying single carrier transmission in uplink or may be applied to another case.

### <First Embodiment>

In the first embodiment, an example of a new signal supported/introduced in a future radio communication system (for example, 6G or later generations) is described.

The new signal may be referred to as a pilot signal (PS), a 6G pilot signal, a new signal group, a signal group for 6G, a synchronization/reference signal (SS/RS), a 6G synchronization/reference signal, or the like.

The new signal (hereinafter, also referred to as a pilot signal) may be a signal that is generated based on a certain rule and that has different sequences generated depending on an identification number of a cell (for example, cell ID). The certain rule may be, for example, a specific sequence (for example, Zadoff-Chu sequence/M sequence or the like).

In a case of supporting single carrier transmission in downlink at least, a terminal may receive the pilot signal with sequences generated based on a cell ID.

The pilot signal may be a signal that no notification of information is performed with in an explicit manner. Note that, as in cell ID notification with a synchronization signal, one or a plurality of candidates may be defined in advance and a terminal may blindly detect the candidates to acquire information from the pilot signal implicitly.

The pilot signal may have a plurality of features. Alternatively, the pilot signal may have features of a plurality of signals in any existing system in combination.

As an example, the pilot signal may have at least one of the following features: feature #1 (at least one of features #1-1 to #1-6), feature #2 (features #2-1 to #2-3), feature #3 (features #3-1 to #3-3), and feature #4 (features #4-1 and #4-2). Alternatively, the pilot signal may have two or more of them in combination.

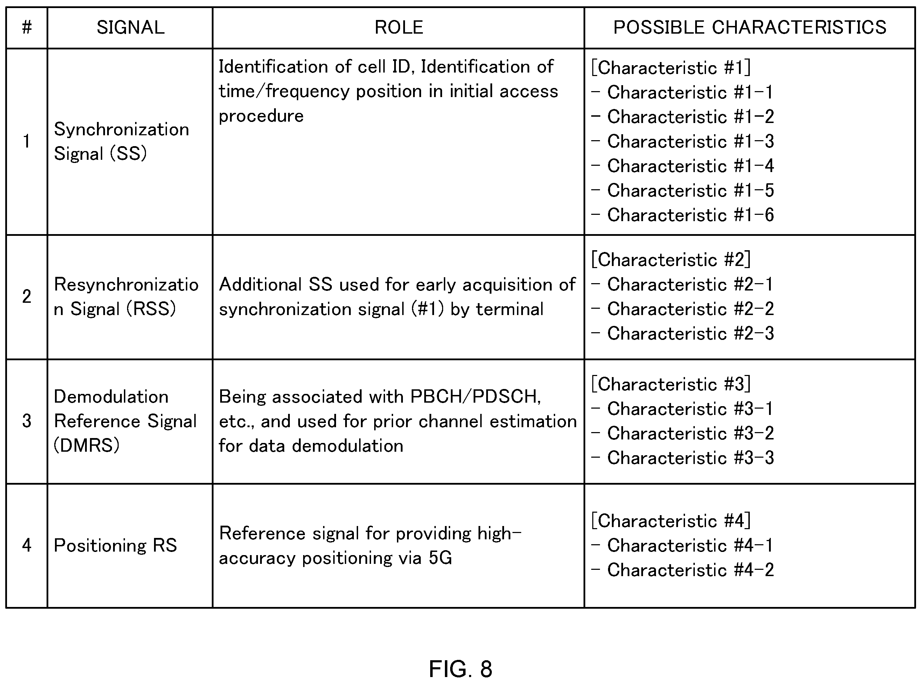

Features #1 to #4 may each be a feature that a certain signal in any existing system has (see FIG. 8). For example, feature #1 may be a feature that a synchronization signal (SS) has. Feature #2 may be a feature that a resynchronization signal (RSS) has. Feature #3 may be a feature that a demodulation reference signal (DMRS) has. Feature #4 may be a feature that a positioning reference signal (Positioning RS) has. Signals that the respective features correspond to are, of course, not limited to this.

### {Feature #1}

- Feature #1-1: a terminal assumes any transmission periodicity or any transmission periodicity is separately configured for a UE
- Feature #1-2: repetition transmission (repeated transmission) is applied in association with any ID (for example, beam ID)
- Feature #1-3: generated based on time location such as a timing of a symbol/system frame number (SFN) and on information that can specify a cell ID
- Feature #1-4: notification of a cell ID is made using a plurality of signals, assuming step-by-step terminal processing
- Feature #1-5: the pilot signal is not a terminal-specific signal
- Feature #1-6: a time/frequency location assumed by a terminal at an initial time point is fixed

Feature #1 (for example, at least one of features #1-1 to #1-6) may be a feature that a synchronization signal (SS) used for cell ID specification or time/frequency location specification in an initial access procedure has.

### {Feature #2}

- Feature #2-1: the pilot signal is configured as necessary by an MIB/SIB or the like
- Feature #2-2: a transmission periodicity/start time offset and a time length for transmission are configured
- Feature #2-3: a transmit power offset is configured

Feature #2 (for example, at least one of features #2-1 to #2-3) may be a feature that an additional synchronization signal (RSS) used for a terminal to supplement a synchronization signal early has.

### {Feature #3}

- Feature #3-1: the pilot signal is a terminal-specific signal
- Feature #3-2: temporal location/allocation density is configurable
- Feature #3-3: the pilot signal is transmitted together with transmission of associated data (non-leaving signal)

Feature #3 (for example, at least one of features #3-1 to #3-3) may be a feature that a demodulation reference signal (DMRS) associated with a PBCH/PDSCH or the like and used for channel estimation in advance for data demodulation has.

### {Feature #4}

- Feature #4-1: the pilot signal is not a terminal-specific signal
- Feature #4-2: temporal location/allocation density and the like are configurable

Feature #4 (for example, at least one of features #4-1 to #4-2) may be a feature that a positioning reference signal (for example, Positioning RS) used for provision of location positioning with high accuracy over 5G has.

The terminal may control a certain operation/certain processing (for example, at least one of synchronization processing, demodulation processing, and positioning processing), based on at least part of the sequences of the pilot signal or at least part of resources corresponding to the pilot signal.

For the pilot signal (or sequences of the pilot signal), at least one of Options 1-1 to 1-4 below may be applied.

### {Option 1-1}

Among the sequences of the pilot signal (PS sequences), all the resources may have all or part of the following features in combination: feature #1 (for example, at least one of features #1-1 to #1-6)/feature #2 (for example, at least one of features #2-1 to #2-3)/feature #3 (for example, at least one of features #3-1 to #3-3)/feature #4 (for example, at least one of features #4-1 to #4-2). Alternatively, among the sequences of the pilot signal (PS sequences), part of the resources may have all or part of the following features in combination: feature #1 (for example, at least one of features #1-1 to #1-6)/feature #2 (for example, at least one of features #2-1 to #2-3)/feature #3 (for example, at least one of features #3-1 to #3-3)/feature #4 (for example, at least one of features #4-1 to #4-2).

Feature #1 to feature #4 may include different sequence generation methods/resource amounts to be mapped/periodicities/start offsets/transmit powers.

### <<Aspect 1-1-1>>

For example, all of the sequences of the pilot signal may be used as a synchronization signal and as a certain reference signal (RS). In other words, the synchronization signal and the reference signal may have a common feature. In this case, the pilot signal used as the synchronization signal and the pilot signal used as the reference signal may be derived by the same mechanism (for example, the same expression).

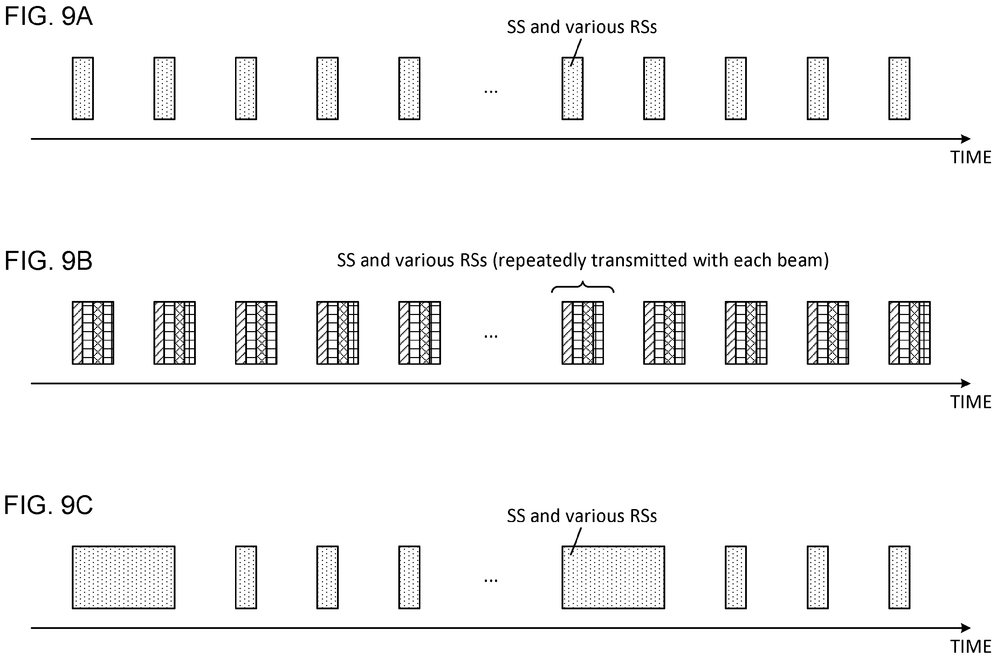

The pilot signals may be evenly mapped in the time domain at any periodicity (see FIG. 9A). FIG. 9A shows an example of a case with a pattern where the pilot signals are evenly temporal-mapped at any periodicity. The pilot signals may be used as synchronization signals/certain reference signals. A transmission condition such as a periodicity for the pilot signals may be defined in a specification or may be configured for a terminal by a higher layer parameter.

Alternatively, for the pilot signals, repetition transmission per beam may be applied (see FIG. 9B). For example, the pilot signals with different beams applied (or pilot signals of different indices) may be evenly mapped in the time domain at any periodicity. The number of beams (or indices of the pilot signals) may be defined in advance in a specification or notification of the number may be made from a base station to a terminal.

Alternatively, the pilot signals may be unevenly mapped in the time domain at any periodicity (see FIG. 9C). FIG. 9C shows an example of a case with a pattern where the pilot signals are unevenly temporal-mapped at any periodicity. For example, a pilot signal mapped in a certain time domain (for example, first time length) may be used as a synchronization signal and a pilot signal mapped in another time domain (for example, second time length) may be used as a reference signal.

### <<Aspect 1-1-2>>

All of the sequences of the pilot signal may be used as a DMRS and part of the sequences may be used as a synchronization signal (SS).

In this case, a transmission condition for the pilot signal used as the synchronization signal and a transmission condition for the pilot signal used as the reference signal (non-synchronization signal) may be configured separately (or configured differently).

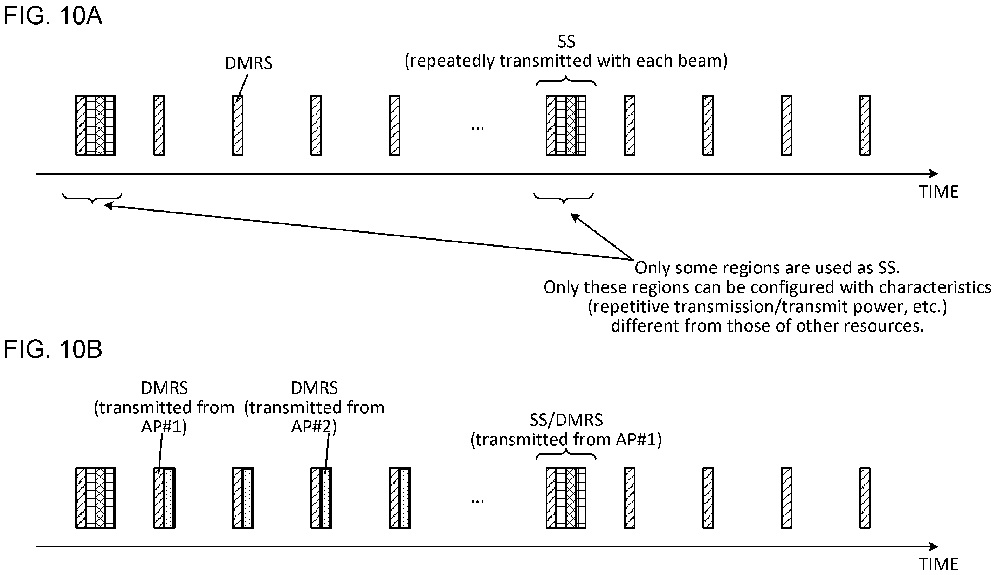

For example, only for the synchronization signal (SS) (or only for the pilot signal used as the synchronization signal), repetition transmission may be applied (see FIG. 10A). In other words, among the pilot signals, only part of the time domain/frequency domain may be used as the synchronization signal and the part of the domain may only have a condition/feature different from another domain (or resource). Such a different condition/feature may be, for example, at least one of repetition transmission, resource amount, transmit power, and the like. FIG. 10A shows a case where repetition transmission per beam is applied only when the pilot signal is used as the synchronization signal.

Alternatively, only DMRSs (or only the pilot signals used as the DMRSs) may be transmitted from a plurality of antenna ports (see FIG. 10B). For example, the pilot signal may be transmitted from a first antenna port when used as the synchronization signal. The pilot signals may be transmitted from the first antenna port and a second antenna port when transmitted as the DMRSs.

Note that, the number of antenna ports and an antenna port number are not limited to this. The number of antenna ports/antenna port number applied to the synchronization signal and the number of antenna ports/antenna port number applied to the DMRS may be defined in a specification separately or may be configured by a higher layer parameter.

At least one of a transmission condition (for example, transmission periodicity/allocated resource/mapping pattern or the like) for the pilot signal used as the synchronization signal and a transmission condition (for example, transmission periodicity/allocated resource/mapping pattern or the like) for the pilot signal used as the DMRS may be defined in a specification or may be configured/indicated for a terminal from a base station by higher layer signaling/DCI.

Note that the pilot signal used as the synchronization signal and the pilot signal used as the reference signal (for example, DMRS) may be derived by different mechanisms (for example, different expressions). The different expressions may mean that the expressions are different in part of the parameters included in the expressions.

### {Option 1-2}

For the sequences of the pilot signal (for example, 6G RS sequences), a plurality of patterns of time locations where the resources are to be allocated may be defined/prescribed and at least one of the plurality of patterns (or candidates of the patterns) may be configured/indicated for a terminal.

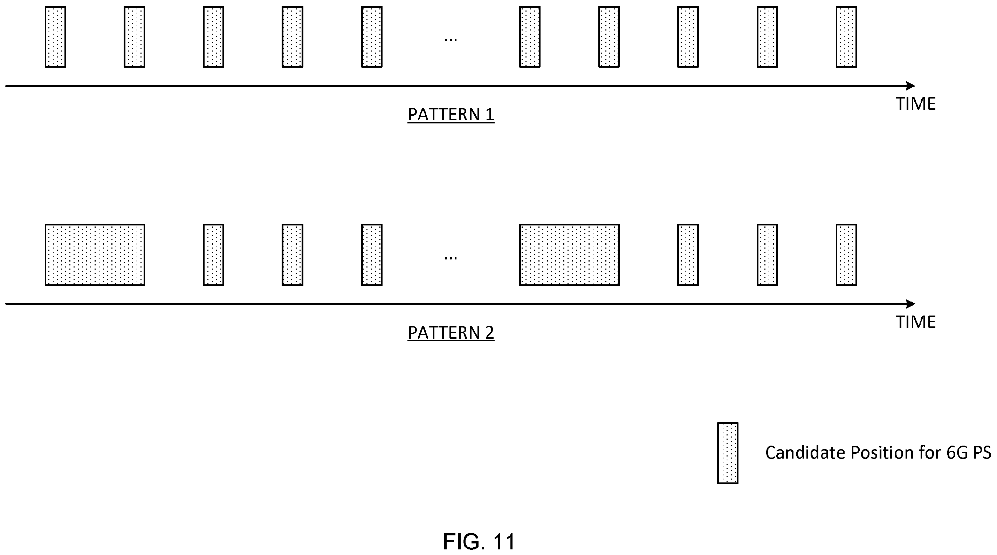

FIG. 11 shows an example of a plurality of mapping patterns for the pilot signals. Pattern 1 shows an example of the pilot signals that the same mapping pattern is applied for a certain periodicity. In other words, each pilot signal has the same time domain (for example, time length).

Pattern 2 shows a case where a first time domain (for example, first time length) and a second time domain (for example, second time length) are applied to the pilot signals. Which of Pattern 1 or Pattern 2 to be applied may be indicated/configured for a terminal from a base station by higher layer signaling/DCI. Alternatively, the terminal may autonomously determine a pattern to be applied based on a terminal capability.

In FIG. 11, although two patterns are shown, the patterns are not limited to this. For example, a pattern different in a transmission periodicity of the pilot signals may be configured. The number of patterns and a mapping pattern in the time domain/frequency domain of each pattern are not limited to this. The candidates of the patterns may be defined in a specification or may be configured for a terminal from a base station by higher layer signaling or the like.

A plurality of patterns may be configured for a terminal. Based on the plurality of patterns configured, the terminal may control reception of the pilot signals corresponding to the respective patterns.

### {Option 1-3}

Whether the sequences of the pilot signal (for example, 6G RS sequence) have any feature of the above-described features #1 to #4 may be determined depending on a time location for mapping, on a combination of a temporal location and frequency location, or on a pattern for determination of a time location.

For example, a pilot signal allocated in a certain frequency domain (for example, BWP/CC/center region of communication band) may have feature #1/feature #2. A pilot signal allocated to a symbol/slot/frequency domain the same as that for a specific channel (for example, PDSCH/PUSCH) or to a symbol/slot/frequency domain adjacent to that for the specific channel may be used as feature #3. Alternatively, a pilot signal with a certain pattern of transmission at a certain periodicity may have feature #1/feature #2/feature #4.

### {Option 1-4}

For the pilot signal, a terminal may assume a default configuration. The default configuration may be at least one of Option 1-1 to Option 1-3 or at least one of feature #1 to feature #4. Alternatively, an additional configuration for the pilot signal may be separately notified to the terminal.

A base station may configure for the terminal a plurality of the pilot signals with different configurations (or transmission conditions). Such pilot signal configurations (or configuration information) may be configured in a cell-specific/BWP-specific manner. Alternatively, the pilot signal configurations (or configuration information) may be configured in a terminal-specific manner.

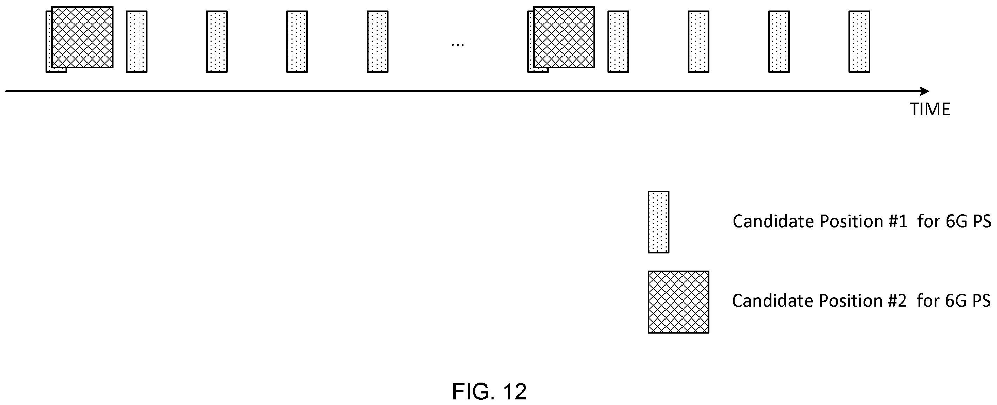

For example, periodic pilot signal configuration and additional pilot signal configuration may be performed (see FIG. 12). FIG. 12 shows an example of a case where a pilot signal (candidate position #1) to be transmitted periodically and an additional pilot signal (candidate position #2) are configured. Candidate position #1 and candidate position #2 may be arranged to have no overlap or may be arranged to have an overlap as shown in FIG. 12.

With this, such an additional pilot signal enables the additional pilot signal to be allocated in a certain time domain/frequency domain. This enables more complex pilot signal configuration to be made by configuring the additional pilot signal for an insufficient resource even when certain density is required like a reference signal for positioning (for example, PRS or the like).

In a case where a plurality of pilot signals (for example, candidate position #1 and candidate position #2) have an overlap in their positions, AND/OR operation may be performed on both the pilot signals for determination of the allocation. Alternatively, drop/cancel or the like of a configuration for one of the pilot signals may be assumed.

### {Variations}

Although, in Option 1-1 to Option 1-4, description is made taking DL single carrier transmission as an example, an applicable communication system is not limited to this. For example, application to UL (for example, single carrier transmission) may be possible. Alternatively, application to multi-carrier transmission may be possible.

### <Second Embodiment>

In the second embodiment, an example of an initial access operation in a future radio communication system (for example, 6G or later generations) is described. The second embodiment may be employed independent of or in combination with the first embodiment.

In the following, although description is given taking a case, as an example, where a cell of an existing system (for example, 4G/5G) and a cell of 6G co-exist and are temporally synchronized, a case for the present embodiment to be applicable to is not limited to this.

In a case where a 6G cell and an existing system cell co-exist and are temporally synchronized, an initial access operation in 6G may be defined in association with a 4G/5G synchronization signal/broadcast channel (for example, SS/PBCH). The synchronization signal/broadcast channel (for example, SS/PBCH) may be interpreted as a synchronization signal block (for example, SS/PBCH block).

For example, a synchronization signal of 6G may have at least one of functions #2-1 to #2-6 below provided by a synchronization signal (SS)/broadcast channel (PBCH) of 4G/5G. In other words, regarding functions #2-1 to #2-6 below provided by an SS/PBCH of 4G/5G, not all the functions are similarly implemented by an SS/PBCH of 6G, but, on the premise that part of the functions is provided by the SS/PBCH of 4G/5G, any processing/notification of 6G may be omitted.
- Function #2-1: time synchronization (for example, detection of a symbol boundary/specification of an SFN)
- Function #2-2: frequency synchronization (for example, detection of a subcarrier location)
- Function #2-3: correction of a frequency offset
- Function #2-4: specification of a cell ID
- Function #2-5: notification of system information
- Function #2-6: cell positioning

For example, a terminal may assume that, regarding information of a certain 6G cell, notification of the information is made on 4G/5G side or certain information is defined between 6G and 4G/5G in association to allow the notification to be unnecessary.

A terminal may control an initial access operation in a radio communication system of 6G or later generations by using at least one of Option 2-1 to Option 2-3 below.

### {Option 2-1}

An SS/PBCH of 4G/5G and an SS/PBCH of 6G may be defined in association. Alternatively, information explicitly or implicitly notified with an SS/PBCH of 4G/5G and information explicitly or implicitly notified with an SS/PBCH of 6G may be defined in association. With this, in an initial access operation in 6G, an operation related to at least one of function #2-1 to function #2-6 (for example, part of operations related to detection/estimation) may be omitted.

### <<Aspect 2-1-1>>

System information corresponding to 6G may be notified to a terminal by using an existing system (for example, 4G/5G). In this case, on a 6G cell side, on the premise that the system information is notified on 5G side, a configuration may be used where no channel corresponding to a broadcast channel (PBCH) is prepared/supported.

In this case, when performing an access operation (for example, initial access operation) for 6G, the terminal may control based on information (for example, SS/PBCH block) notified from another cell (for example, 4G/5G cell). This enables reception processing in an initial access operation for 6G to be simplified and a broadcast channel corresponding to 6G to be omitted.

### <<Aspect 2-1-2>>

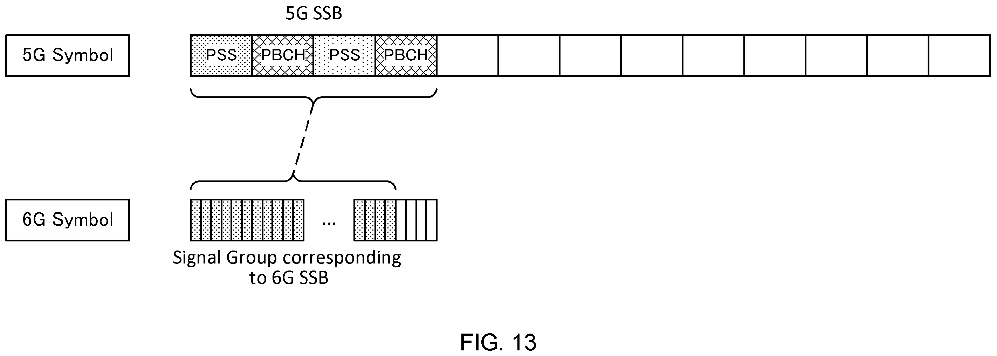

A synchronization signal (SS) corresponding to 6G may have a configuration to support an SS of one-step. In this case, regarding a 6G synchronization signal, for example assuming specialized in a certain function (for example, detection of a symbol boundary), synchronization signals provided in two-step on 4G/5G side (types of PSS and SSS) may be provided in one-step of synchronization signal (one type of SS) on 6G side (see FIG. 13).

FIG. 13 shows a case where, in 5G system, an initial access operation is performed using a synchronization signal block including two synchronization signals (for example, PSS and SSS) and PBCHs and, in 6G system, an initial access operation is performed using one synchronization signal (for example, SS) and PBCH. Note that, in an initial access operation in 6G system, only one synchronization signal (SS) may be used and reception of a broadcast channel (PBCH) may be omitted. In this case, for example, Aspect 2-1-1 may be used.

### <<Aspect 2-1-3>>

A cell ID of 6G may be derived based on a cell ID of 4G/5G. For example, a cell ID of 6G may be the same as a cell ID of 4G/5G or may be an ID derived in a way that certain information (for example, offset) is applied to a cell ID of 4G/5G. For example, a terminal may omit, assuming that a cell ID of 6G is the same as a cell ID of 4G/5G, a cell ID detection operation with a 6G synchronization signal.

Alternatively, on the premise that cell IDs of 6G are defined in association with cell IDs of 4G/5G, part of the cell IDs of 6G may be associated with a synchronization signal of 4G/5G and the rest cell IDs of 6G may be associated with a synchronization signal of 6G. A terminal may perform an initial access procedure (for example, determination of a cell ID) in a 6G cell, based on the synchronization signal of 4G/5G and the synchronization signal of 6G.

### {Option 2-2}

A configuration may be used where an SS/PBCH of 4G/5G and an SS/PBCH of 6G are allocated to the same time/frequency location. Alternatively, a configuration may be used where an SS/PBCH of 4G/5G and an SS/PBCH of 6G may be allocated to associated time/frequency locations.

A terminal may assume that an SS/PBCH of 6G is allocated to a time/frequency location the same as that of an SS/PBCH of 4G/5G or allocated to a time/frequency location associated with an SS/PBCH of 4G/5G.

In this case, at least one of an operation related to specification of a time location such as an SFN on 6G cell side, an operation related to specification of a cell ID, and an operation related to specification of a beam ID may be omitted/simplified. Alternatively, another operation (for example, operation related to specification of a frequency location) on 6G cell side may be omitted/simplified.

### <<Aspect 2-2-1>>

A synchronization signal (SS) of 5G and a synchronization signal (SS) of 6G that are transmitted in the same time location may have the same cell ID. Alternatively, when a synchronization signal (SS) of 5G and a synchronization signal (SS) of 6G are transmitted in the same time location, a cell ID of 6G may be determined based on a cell ID corresponding to the synchronization signal of 5G.

A terminal may assume that, when an SS of 5G and an SS of 6G are transmitted in the same time location (or have an overlap in the time domain), a cell ID corresponding to the SS of 5G is the same as a cell ID corresponding to the SS of 6G. Alternatively, the terminal may determine that, when an SS of 5G and an SS of 6G are transmitted in the same time location (or have an overlap in the time domain), a cell ID of 6G based on a cell ID of the SS of 5G.

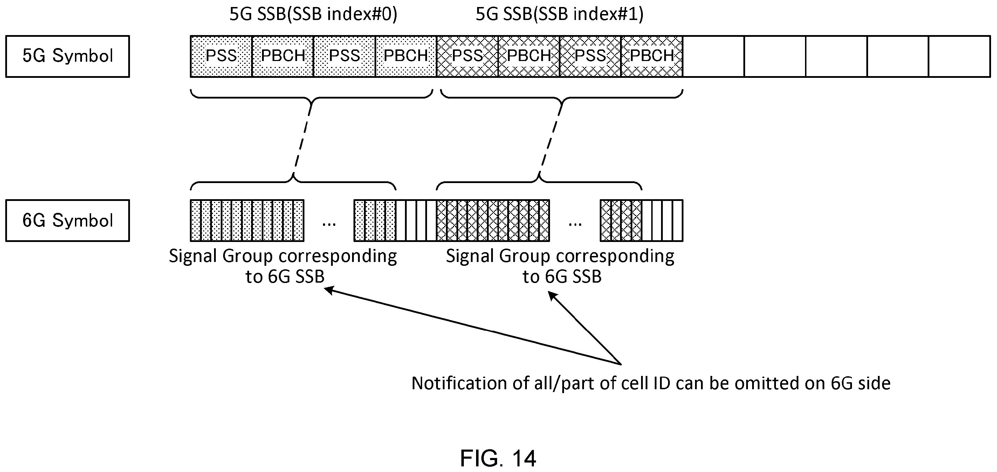

In this case, a start timing of the SS of 5G may be the same as a start timing of the SS of 6G (see FIG. 14). FIG. 14 shows a case where respective signal groups corresponding to SSBs of 6G are mapped to the same start timings (for example, same start symbols) as that of a first SSB (for example SSB #0) and a second SSB (for example, SSB #1) of 5G. For example, one OFDM symbol corresponding to 5G may include X symbols corresponding to 6G. In the signal groups corresponding to SSBs of 6G, partial or all notification of cell IDs may be omitted.

Alternatively, a start timing of an SS of 5G and a start timing of an SS of 6G may be provided with a gap for a certain offset. The certain offset may be defined in a specification or notification of the offset may be separately made from a base station to a terminal.

### <<Aspect 2-2-2>>

A cell ID of a synchronization signal (SS) of 5G and a beam number of a synchronization signal (SS) of 6G that are transmitted in the same time location may be the same. Alternatively, when a synchronization signal (SS) of 5G and a synchronization signal (SS) of 6G are transmitted in the same time location, a beam number (or reference signal index) corresponding to the synchronization signal of 6G may be determined based on a beam number (or reference signal index) corresponding to the synchronization signal of 5G.

A terminal may assume that, when an SS of 5G and an SS of 6G are transmitted in the same time location (or have an overlap in the time domain), a beam number corresponding to the SS of 5G is the same as a beam number corresponding to the SS of 6G. Alternatively, the terminal may determine that, when an SS of 5G and an SS of 6G are transmitted in the same time location (or have an overlap in the time domain), a beam number of the SS of 6G based on a beam number of the SS of 5G.

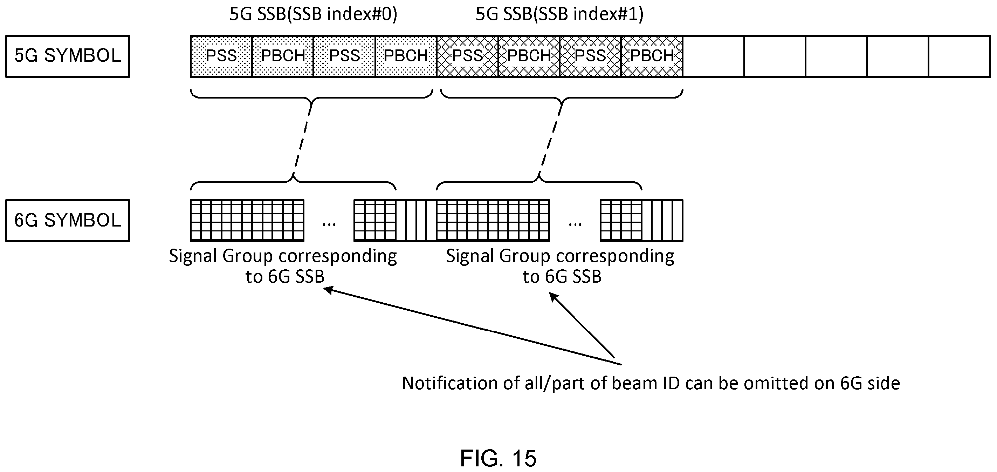

In this case, a start timing of the SS of 5G may be the same as a start timing of the SS of 6G (see FIG. 15). FIG. 15 shows a case where respective signal groups corresponding to SSBs of 6G are mapped to the same start timings (for example, same start symbols) as that of a first SSB (for example SSB #0) and a second SSB (for example, SSB #1) of 5G. For example, one OFDM symbol corresponding to 5G may include X symbols corresponding to 6G. In the signal groups corresponding to SSBs of 6G, partial or all notification of beam IDs may be omitted.

Alternatively, a start timing of an SS of 5G and a start timing of an SS of 6G may be provided with a gap for a certain offset. The certain offset may be defined in a specification or notification of the offset may be separately made from a base station to a terminal.

Aspect 2-2-2 may be combined with Aspect 2-2-1 for application.

### {Option 2-3}

With an additional notification bit provided on the side of a cell of an existing system of 4G/5G, by using the notification bit, notification of at least one of a flag of 6G presence or absence/cell prohibition, usage of any channel such as synchronization signal (SS), procedure pattern, and the like may be sent to a terminal.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific
   processing/operation/control/information for at least one of the above-described embodiments
- supporting of downlink single carrier transmission
- supporting of a pilot signal (for example, a pilot signal for 6G system)
- supporting of connection (for example, dual connectivity) to both 4G/5G (for example, Rel. 17 or earlier versions) and 6G
- supporting of a symbol length for 6G

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. Examples of the specific information may include information indicating enabling of a certain operation based on a pilot signal, any RRC parameter for a specific RAT (for example, 6G)/release (for example, Rel. 18/19/20), and the like.

When at least one of the specific UE capabilities above is not supported by the UE or the UE is not configured with the specific information, an operation of Rel. 15/16 may be applied, for example.

### (Supplementary Notes)

Regarding one embodiment of the present disclosure, the following supplementary notes of the invention will be given.

### {Supplementary Note 1-1}

A terminal including: a receiving section that receives a pilot signal with sequences generated based on an identification number of a cell; and a control section that controls synchronization processing, demodulation processing, and positioning processing, based on at least part of the sequences of the pilot signal or at least part of resources corresponding to the pilot signal.

### {Supplementary Note 1-2}

The terminal according to supplementary note 1-1, wherein all of the sequences of the pilot signal are used as a demodulation reference signal and all or part of the sequences of the pilot signal are used as a synchronization signal.

### {Supplementary Note 1-3}

The terminal according to supplementary note 1-1 or 1-2, wherein a plurality of candidates of time locations where the resources corresponding to the pilot signal are to be allocated are defined or configured.

### {Supplementary Note 1-4}

The terminal according to any one of supplementary notes 1-1 to 1-3, wherein the control section performs at least one of the synchronization processing, the demodulation processing, and the positioning processing, based on at least one of a time location and a frequency location where the sequences of the pilot signal are mapped.

### {Supplementary Note 2-1}

A terminal including: a receiving section that receives, in a first radio communication system, a synchronization signal/physical broadcast channel (SS/PBCH) block including a first synchronization signal, a second synchronization signal, and a physical broadcast channel and receives, in a second radio communication system, a signal group for the second radio communication system; and a control section that controls at least one of synchronization processing, frequency offset correction, cell ID specification, system information acquisition, and cell positioning in the second radio communication system, based on both the SS/PBCH block and the signal group.

### {Supplementary Note 2-2}

The terminal according to supplementary note 2-1, wherein at least one of the first synchronization signal, the second synchronization signal, and the physical broadcast channel is not included in the signal group.

### {Supplementary Note 2-3}

The terminal according to supplementary note 2-1 or 2-2, wherein the control section determines at least one of a cell ID, a beam ID, and a frame number corresponding to the second radio communication system, based on a time location relationship between the SS/PBCH block and the signal group.

### {Supplementary Note 2-4}

The terminal according to any one of supplementary notes 2-1 to 2-3, wherein a plurality of SS/PBCH blocks and a plurality of signal groups are mapped to have each overlap in a time domain, in a case where a plurality of symbols supported in the second radio communication system are included with respect to one symbol supported in the first radio communication system.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

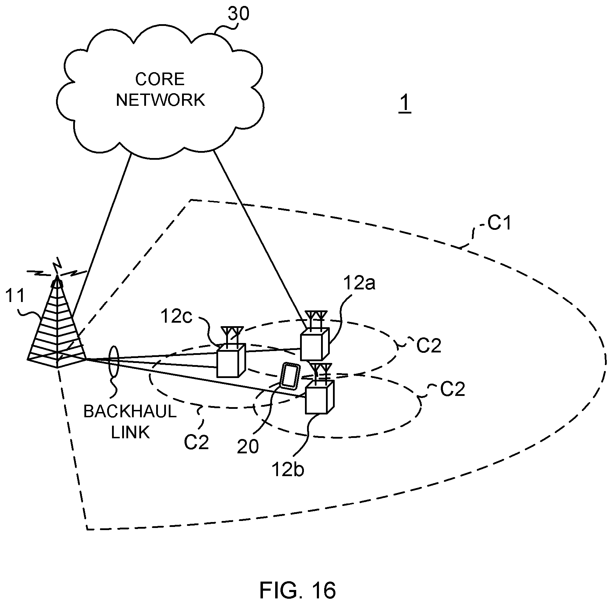

FIG. 16 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR), or the like the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and a maintenance operation management (Operation, Administration and Maintenance (Management) (OAM)), for example. Note that one network node may provide a plurality of functions. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

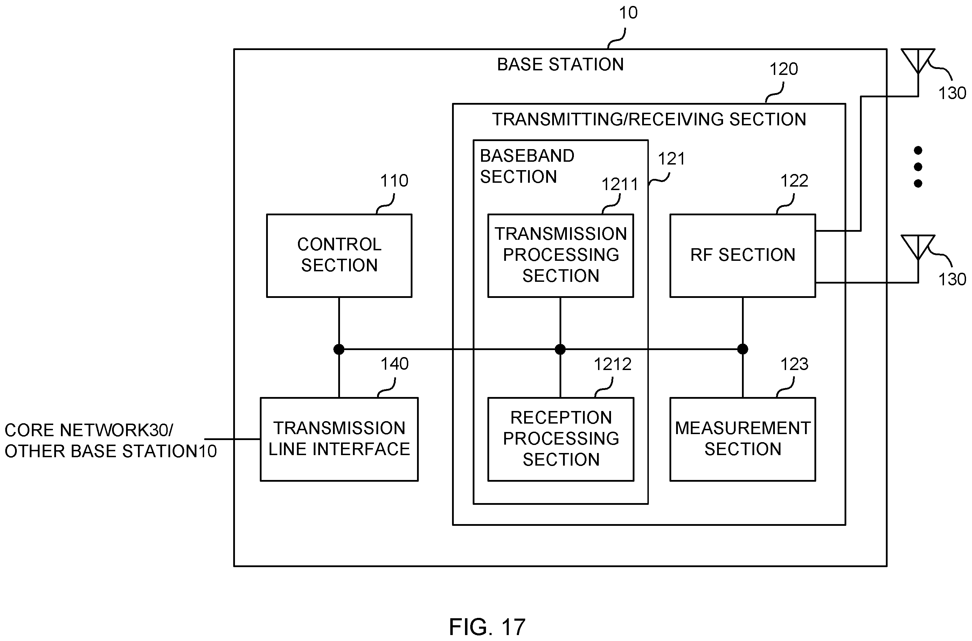

FIG. 17 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal to and from an apparatus (for example, a network node providing an NF) included in the core network 30, another base station 10, or the like, and perform acquisition, transmission, or the like of user data (user plane data), control plane data, or the like for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit, to a terminal, a pilot signal with sequences generated based on an identification number of a cell. The control section 110 may control whether the pilot signal is used for any of synchronization processing, demodulation processing, and positioning processing in the terminal, based on at least part of the sequences of the pilot signal or at least part of resources corresponding to the pilot signal.

For a terminal connected to a first radio communication system where a synchronization signal/physical broadcast channel (SS/PBCH) block including a first synchronization signal, a second synchronization signal, and a physical broadcast channel is transmitted, the transmitting/receiving section 120 may transmit, in a second radio communication system, a signal group for the second radio communication system. The control section 110 may control to transmit a signal group in a resource associated with a resource corresponding to a specific SS/PBCH block. A signal group is sufficient to include one type or a plurality of types of signal (for example, at least a synchronization signal).

### (User Terminal)

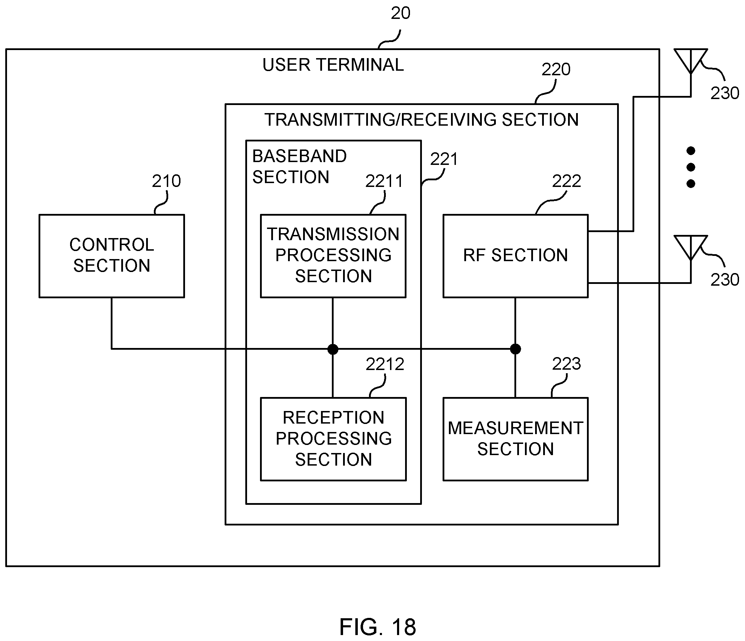

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a pilot signal with sequences generated based on an identification number of a cell. The control section 210 may control synchronization processing, demodulation processing, and positioning processing, based on at least part of the sequences of the pilot signal or at least part of resources corresponding to the pilot signal.

All of the sequences of the pilot signal may be used as a demodulation reference signal and all or part of the sequences of the pilot signal may be used as a synchronization signal. A plurality of candidates of time locations where the resources corresponding to the pilot signal are to be allocated may be defined or configured. The control section 210 may control to perform at least one of the synchronization processing, the demodulation processing, and the positioning processing, based on at least one of a time location and a frequency location where the sequences of the pilot signal are mapped.

The transmitting/receiving section 220 may receive, in a first radio communication system, a synchronization signal/physical broadcast channel (SS/PBCH) block including a first synchronization signal (for example, PSS), a second synchronization signal (for example, SSS), and a physical broadcast channel and receive, in a second radio communication system, a signal group for the second radio communication system. The control section 210 may control at least one of synchronization processing, frequency offset correction, cell ID specification, system information acquisition, and cell positioning in the second radio communication system, based on both the SS/PBCH block and the signal group.

A signal group may have a configuration that at least one of the first synchronization signal, the second synchronization signal, and the physical broadcast channel is not included in the signal group. Alternatively, the signal group may have a configuration that the signal group includes one type of synchronization signal, instead of including two types of synchronization signal as in an existing system.

The control section 210 may determine at least one of a cell ID, a beam ID, and a frame number corresponding to the second radio communication system, based on a time location relationship between the SS/PBCH block and the signal group. A plurality of SS/PBCH blocks and a plurality of signal groups may be mapped to have each overlap in a time domain, in a case where a plurality of symbols supported in the second radio communication system are included with respect to one symbol supported in the first radio communication system.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

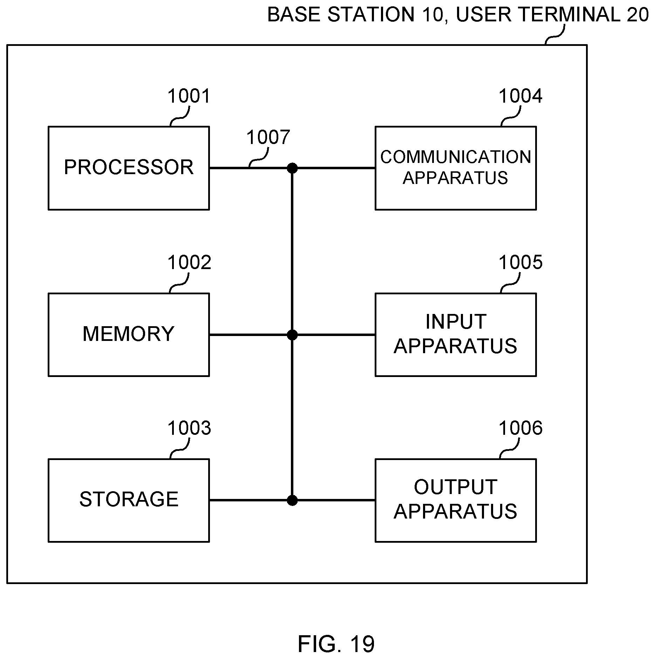

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight) ", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

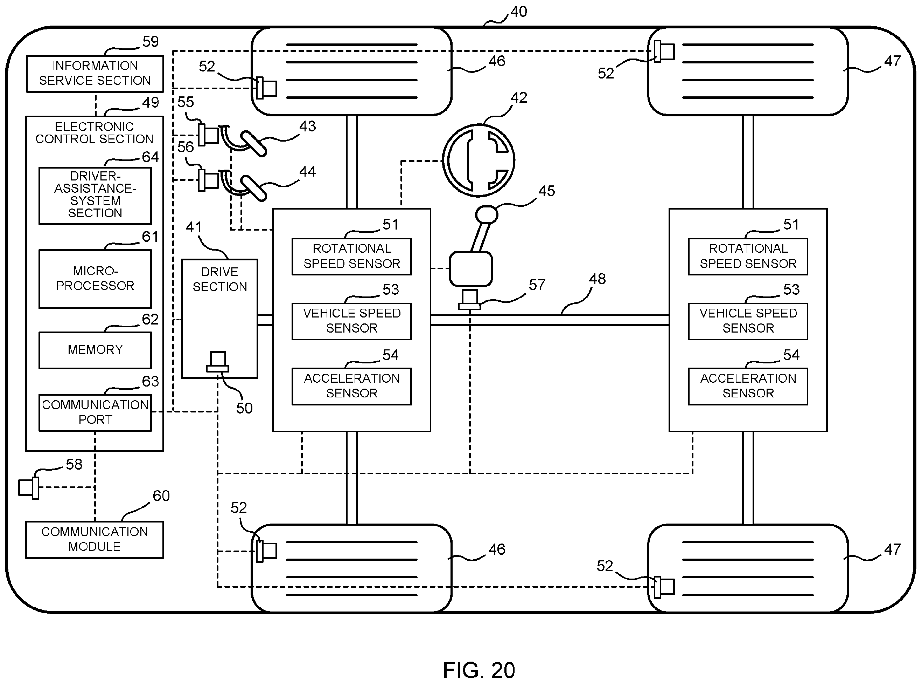

FIG. 20 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives, in a first radio communication system, a synchronization signal/physical broadcast channel (SS/PBCH) block including a first synchronization signal, a second synchronization signal, and a physical broadcast channel and receives, in a second radio communication system, a signal group for the second radio communication system; and
a control section that controls at least one of synchronization processing, frequency offset correction, cell ID specification, system information acquisition, and cell positioning in the second radio communication system, based on both the SS/PBCH block and the signal group.

2. The terminal according to claim 1, wherein
at least one of the first synchronization signal, the second synchronization signal, and the physical broadcast channel is not included in the signal group.

3. The terminal according to claim 1, wherein
the control section determines at least one of a cell ID, a beam ID, and a frame number corresponding to the second radio communication system, based on a time location relationship between the SS/PBCH block and the signal group.

4. The terminal according to claim 1, wherein
a plurality of SS/PBCH blocks and a plurality of signal groups are mapped to have each overlap in a time domain, in a case where a plurality of symbols supported in the second radio communication system are included with respect to one symbol supported in the first radio communication system.

5. A radio communication method for a terminal, comprising:
receiving, in a first radio communication system, a synchronization signal/physical broadcast channel (SS/PBCH) block including a first synchronization signal, a second synchronization signal, and a physical broadcast channel and receiving, in a second radio communication system, a signal group for the second radio communication system; and
controlling at least one of synchronization processing, frequency offset correction, cell ID specification, system information acquisition, and cell positioning in the second radio communication system, based on both the SS/PBCH block and the signal group.

6. A base station comprising:
a transmitting section that transmits, to a terminal connected to a first radio communication system where a synchronization signal/physical broadcast channel (SS/PBCH) block including a first synchronization signal, a second synchronization signal, and a physical broadcast channel is transmitted, a signal group for a second radio communication system in the second radio communication system; and
a control section that controls to transmit the signal group in a resource associated with a resource corresponding to a specific SS/PBCH block.
